# EUROPÄISCHE PATENTSCHRIFT

(11) **EP 1 979 124 B1**
(45) Veröffentlichungstag und Bekanntmachung des Hinweises auf die Patenterteilung: **31.08.2011**
(21) Anmeldenummer: 07712073.1
(22) Anmeldetag: 22.01.2007
(51) Int. Cl.: B23K 26/04

(54) **LASERSTRAHLSCHWEIßKOPF, VERWENDUNG DIESES LASERSTRAHLSCHWEIßKOPFES UND VERFAHREN ZUM STRAHLSCHWEIßEN**
LASER BEAM WELDING HEAD, ITS USE AND BEAM WELDING METHOD
TETE DE SOUDAGE A FAISCEAU LASER, SON UTILISATION ET MÉTHODE DE SOUDAGE PAR FAISCEAU

(30) Priorität: 01.02.2006 DE 102006004919
(43) Veröffentlichungstag der Anmeldung: 15.10.2008
(73) Patentinhaber: ThyssenKrupp Steel Europe AG, 47166 Duisburg (DE)
(72) Erfinder: BEHR, Friedrich, 40883 Ratingen (DE); BLUMENSAAT, Erwin, 40357 Dortmund (DE); DORNSCHEIDT, Christian, 40625 Düsseldorf (DE); KOCH, Martin, 47506 Neukirchen-Vluyn (DE); PLHA, Jens, 40468 Düsseldorf (DE); WISCHMANN, Stefan, 10437 Berlin (DE); OTT, Lars, 52353 Düren (DE); SCHÄFER, Ansgar, 52074 Aachen (DE)
(74) Vertreter: Cohausz & Florack
(86) Internationale Anmeldenummer: PCT/EP2007/050617
(87) Internationale Veröffentlichungsnummer: WO 2007/088122

(56) Entgegenhaltungen:
- EP-A1- 0 209 488
- EP-A1- 0 934 796
- EP-A1- 0 934 796
- WO-A-2005/095043
- DE-A1- 10 335 501
- DE-A1-102004 043 076
- DE-A1-102004 043 076
- DE-C1- 3 830 892
- DE-U1- 8 713 471
- US-A- 5 674 415
- US-A1- 2001 008 231

## Beschreibung

Die Erfindung betrifft einen Laserstrahlschweißkopf gemäß dem Oberbegriff des Anspruchs 1. Daneben betrifft die vorliegende Erfindung ein Verfahren gemäß dem Oberbegriff des Anspruchs 10. Die deutsche Offenlegungsschrift DE 103 35 501 A1 offenbart einen solchen Laserstrahlschweißkopf und eine solches Verfahren.

Beim Verschweißen* von Metallbauteilen unter Verwendung eines Schweißstrahls werden häufig Bewegungsautomaten eingesetzt, welche zur Erzeugung der gewünschten Schweißnaht die entsprechende Relativbewegung zwischen den zu verschweißenden Bauteilen und dem Schweißstrahl gewährleisten. Um die notwendigen Energiedichten zur Erzeugung eines "Key-holes" beim Schweißen im Tiefschweißmode zu erzeugen, wird der Schweißstrahl in der Regel sehr stark fokussiert, so dass in Bezug auf die Bewegungsautomaten eine extrem hohe Positioniergenauigkeit gefordert werden muss, um eine gleichbleibende Schweißnahtqualität zu gewährleisten. In der Regel werden Positioniergenauigkeiten für den Schweißstrahl von kleiner +/- 0,15 mm senkrecht zum Verlauf der Schweißnaht gefordert, wobei die Schweißnaht als Stumpfstoß- oder Kehlnaht ausgeführt ist. CNC-gesteuerte, kartesische Portalsysteme erfüllen die Anforderungen an die Positioniergenauigkeit, erfordern jedoch hohe Investitionskosten. Mehrachsenroboter, welche prinzipiell kostengünstiger als kartesische Portalsysteme sind, weisen aufgrund von Eigenschwingungen, hervorgerufen durch Umorientierung von seinen Antrieben und der Weichheit der Antriebe, in bestimmten Achspositionen eine minimale Positionierwiederholgenauigkeit von +/- 0,15 mm auf. Die geforderte Genauigkeit beim dynamischen Positionieren des Schweißstrahls kann deshalb mit Mehrachsenrobotern nicht erreicht werden.

Aus dem Stand der Technik sind Laserstrahlschweißköpfe bekannt, welche zusätzliche Mittel zur Erkennung der Schweißnahtposition und zur Korrektur des Laserschweißkopfes aufweisen. So ist aus der deutschen Offenlegungsschrift DE 103 35 501 A1 bekannt, in einem Vorlauffenster vorlaufend vor der Schweißstrahlposition die tatsächliche Ist-Bahn des Laserschweißstrahlkopfes zu ermitteln, mit zuvor abgespeicherten Solldaten zu vergleichen und den Vorlauf berücksichtigend eine entsprechende Korrektur der Position des Schweißstrahls vorzunehmen. Problematisch an diesem Laserstrahlschweißkopf ist, dass aufgrund der komplexen Vorlaufberechnung hohe Schweißgeschwindigkeiten zu Bahnabweichungen führen.

Die internationale Patentanmeldung WO 2005/095043 A1 offenbart einen Laserstrahlschweißkopf mit Mitteln zur Erfassung der Solllage der Schweißnahtposition, welche über ein Triangulationsverfahren das Profil der Solllage der Schweißnaht nahe der aktuellen Schweißposition ("Key-hole") ermitteln und den Laserschweißkopf relativ zur festgestellten Position der Solllage der Schweißnaht kontinuierlich positionieren. Aufgrund der Berücksichtigung des Vorlaufs zwischen der Schweißposition und der Messposition zur Erfassung der Position der Solllage der Schweißnaht ist auch bei diesem Laserstrahlschweißkopf der Aufwand zur Berechnung des Korrektursignals für den Laserschweißstrahlkopf relativ groß, so dass nur ungenügende Schweißgeschwindigkeiten bei geeigneter Genauigkeit, insbesondere im Fall der Bearbeitung von Radien in Bahnen erzielt werden.

Hiervon ausgehend liegt der vorliegenden Erfindung die Aufgabe zugrunde, einen gattungsgemäßen Laserstrahlschweißkopf sowie ein Verfahren zum Strahlschweißen von Metallteilen zur Verfügung zu stellen, mit welchem eine sehr hohe dynamische Positioniergenauigkeit und gleichzeitig hohe Schweißgeschwindigkeiten realisiert werden kann. Ferner soll eine vorteilhafte Verwendung des Laserstrahlschweißkopfes vorgeschlagen werden.

Die oben hergeleitete Aufgabe wird durch eine Vorrichtung mit den Merkmalen des Patentanspruches 1, deren Verwendung sowie durch ein Verfahren mit den Merkmalen des Patentanspruches 10 gelöst.

Gemäß einer ersten Lehre der vorliegenden Erfindung ist der gattungsgemäße Laserstrahlschweißkopf derart ausgebildet, dass der Abstand der ersten Messposition vorlaufend zur Schweißposition des Schweißstrahls so gewählt ist, dass das erzeugte Korrektursignal ohne Vorlaufberechnung und ohne Berücksichtigung des Vorlaufs der Messposition zur Schweißposition unmittelbar zur Ansteuerung von Mitteln zur Korrektur der Schweißposition des Schweißstrahls verwendet wird.

Es hat sich überraschenderweise gezeigt, dass bei ausreichend geringem Abstand zwischen der Anordnung der ersten Messposition und der Schweißposition des Schweißstrahls bzw. der Position des "Key-holes" des Schweißstrahls auf die Berücksichtigung des Vorlaufes zwischen der Messposition und der Position des Schweißstrahls verzichtet werden kann. Hierdurch resultiert eine besonders hohe Geschwindigkeit hinsichtlich der Korrektur der Schweißstrahlposition in Bezug auf die Abweichungen der Schweißstrahlposition, beispielsweise aufgrund von Positionierungenauigkeiten oder Eigenschwingungen eines Handling-Systems bzw. eines Mehrachsenroboters. Trotz des systematischen, durch den kleinen Vorlauf bedingten kleinen Restabweichungsfehler, wirkt sich dieser überraschenderweise nicht auf die Nahtlage durch Überschreiten der Lagetoleranz aus. Da die Weiterleitung des Korrektursignals unmittelbar nach Ermittlung der Abweichung von der Sollposition durch die Mittel zur optischen Erfassung der Position der Schweißnaht erfolgt, können besonders hohe Schweißgeschwindigkeiten im Bereich von 10 m/min selbst bei kleinen Schweißradien, beispielsweise von weniger als 60 mm, erzielt werden. Dennoch konnte die geforderte Genauigkeit der Positionierung des Schweißstrahls von +/-0,15 mm auch bei hohen Schweißgeschwindigkeiten eingehalten werden.

Vorzugsweise beträgt der Abstand der ersten Messposition zur Schweißposition des Schweißstrahls maximal 3 mm, vorzugsweise maximal 2 mm. Nach dem Stand der Technik wird die optische Erfassung der Position der Schweißnaht in größerem Abstand zur Schweißposition des Schweißstrahls durchgeführt, so dass der Vorlauf immer berücksichtigt werden muss. Durch den erfindungsgemäßen Abstand der ersten Messposition zur Schweißposition des Schweißstrahls kann erfindungsgemäß der systematische Fehler soweit verringert werden, dass sich dieser nicht mehr auf das Ergebnis hinsichtlich des Überschreitens der Lagetoleranz auswirkt.

Die Dynamik zur Veränderung der Schweißposition kann gemäß einer nächsten ausgebildeten Ausführungsform des erfindungsgemäßen Laserstrahlschweißkopfes dadurch verbessert werden, dass mindestens ein Stellelement im Strahlengang des Schweißstrahls zur Veränderung der Schweißstrahlposition vorgesehen ist, welches durch das Korrektursignal ansteuerbar ist. Im Gegensatz zu dem aus dem Stand der Technik bekannten Verfahren, den Laserstrahlschweißkopf kontinuierlich abhängig von dem Korrektursignal zu bewegen bzw. anzusteuern, vermeidet ein Stellelement im Strahlengang des Schweißstrahls die Korrektur der Position des Schweißstrahls durch Bewegung großer Massen, da lediglich das Stellelement in seiner Position verändert werden muss. Hierdurch kann die Geschwindigkeit der Korrektur noch einmal wesentlich gesteigert werden und Eigenschwingungen des Handlings korrigiert werden.

Ein besonders einfaches Stellelement kann dadurch zur Verfügung gestellt werden, dass als Stellelement mindestens ein kippbarer Spiegel, vorzugsweise ein dichroitischer Spiegel, vorgesehen ist. Kippbare Spiegel können als Stellelement im Vergleich zum gesamten Laserstrahlschweißkopf nahezu trägheitsfrei bewegt bzw. gekippt werden, um die Schweißstrahlposition entsprechend dem ohne Vorlauf berechneten Korrektursignal zu korrigieren. Dichroitische Spiegel besitzen den Vorteil, dass sie Wellenlängen unterhalb oder oberhalb eines bestimmten Wertes sehr gut reflektieren und im jeweils anderen Wellenlängenbereich nahezu transparent sind. Der Strahlengang des Schweißstrahls im Laserschweißkopf kann dann auch als Strahlengang für die optische Erfassung der Schweißnahtposition verwendet werden. Hierzu wird der dichroitische Spiegel so ausgewählt, dass dieser beispielsweise für die Wellenlänge des Schweißstrahllasers hoch reflektierend ist und diesen zur Schweißposition bzw. von der Schweißposition zur Einkopplung bzw. der Quelle des Schweißstrahls reflektiert. Andere Wellenlängen passieren den dichroitischen Spiegel ungehindert und können zur Beobachtung der Position der Schweißnaht genutzt werden. Gleichzeitig kann durch die Nutzung des Strahlengangs des Laserschweißstrahls der Aufbau des erfindungsgemäßen Laserschweißkopfes einfach gehalten werden.

Eine Verbesserung der Prozesssicherheit bei der Bestimmung der Position der Schweißnaht wird erfindungsgemäß dadurch erreicht, dass als Mittel zur optischen Lageerfassung erste Bildverarbeitungsmittel, insbesondere eine erste CMOS-Kamera, und ein erster Linien-Projektor zur Projektion einer in lateraler Richtung zur Schweißnaht verlaufenden Laserlinie an der ersten Messposition vorgesehen sind, wobei im Strahlengang der ersten Bildverarbeitungsmittel ein an die Wellenlänge der Laserlinie angepasstes Filterelement vorgesehen ist. Selbstverständlich weist die Laserlinie, welche auf die zu verschweißenden Metallteile lateral zur Schweißnaht projiziert wird, eine andere Wellenlänge auf als der Schweißstrahl selbst. Vorzugsweise ist das an die Laserlinie angepasste Filterelement besonders steilflankig, um möglichst alle Fehlsignale durch Einstrahlung anderer Wellenlängen außer der Wellenlänge der Laserlinie in den ersten Bildverarbeitungsmitteln zu unterdrücken. Die vorzugsweise einzusetzende CMOS-Kamera zeichnet sich dabei durch besonders kurze Reaktionszeiten durch Zeilenauswahl aus, so dass eine entsprechend schnelle Bildverarbeitung und Auswertung erfolgt. Allerdings ist auch denkbar andere Bildverarbeitungsmittel zu verwenden, sofern die erforderlichen Auswertegeschwindigkeiten erreicht werden.

Als besonders vorteilhaft hat sich herausgestellt, als Lichtquelle für den ersten Linien-Projektor eine Laserquelle mit einer Wellenlänge im nahen Infrarotbereich, vorzugsweise mit einer Wellenlänge von 805 nm vorzusehen, wobei das optische Filterelement im Strahlengang der Bildverarbeitungsmittel eine maximale Transmission bei 805 nm aufweist. Als Linien-Projektoren kommen beispielsweise Laserdioden in Betracht, deren Laserstrahl beispielsweise über eine Zylinderlinse in eine Laserlinie aufgeweitet wird. Das Filterelement kann vorzugsweise besonders steilflankig ausgelegt sein. Beispielsweise kann es lediglich für Wellenlängen im Bereich von 805 +/- 5 nm transparent sein. Im nahen Infrarotbereich ist die vom Schweißstrahl emittierte Strahlungsintensität aber auch die Intensität Wärmestrahlung der Schweißnaht relativ gering, so dass Störungen, bedingt durch Einkopplung von Strahlung aus dem Schweißvorgang selbst in Form des Metalldampfleuchtens oder von der Schweißnaht bei Verwendung der entsprechenden Filterelemente und Laserquellen sehr gut unterdrückt werden können. Damit wird trotz des geringen Abstandes der ersten Messposition von der Schweißposition des Schweißstrahls eine hohe Prozesssicherheit bei der Bestimmung der Abweichung der Schweißnahtposition durch die ersten Bildverarbeitungsmittel gewährleistet.

Ist die Laserlinie in Bezug auf die Beobachtungsachse der ersten Bildverarbeitungsmittel in einem vorgegebenen Winkel auf die Messposition projizierbar, kann das vorteilhafte Lichtschnittprinzip verwendet werden, um neben der lateralen Verschiebung auch eine Information über die vertikale Abweichung der Nahtsolllage zu erhalten. Die erhaltenen Profilwerte für die Schweißnaht können damit nicht nur zur lateralen Korrektur der Schweißposition des Laserstrahlschweißkopfes verwendet werden, sondern auch zu einer Korrektur der Schweißposition in vertikaler Richtung. Beispielsweise können zur vertikalen Korrektur der Schweißposition, beispielsweise des Fokus des Schweißstrahls, zusätzliche Stellelemente im Strahlengang des Schweißstrahls vorgesehen sein.

Gemäß einer nächsten weitergebildeten Ausführungsform des erfindungsgemäßen Laserstrahlschweißkopfes sind weitere optische Elemente, insbesondere Umlenkspiegel, im Strahlengang der ersten Bildverarbeitungsmittel vorgesehen, so dass der Aufbau des erfindungsgemäßen Laserstrahlschweißkopfes besonders kompakt ausgeführt werden kann.

Mit weiteren Mitteln zur optischen Erfassung einer zweiten Messposition in Schweißrichtung nachlaufend hinter der Schweißposition des Schweißstrahls kann gleichzeitig eine nachträgliche Inspektion der Schweißnahtqualität erfolgen.

Das Lichtschnittprinzip kann, gemäß einer nächsten weitergebildeten Ausführungsform des erfindungsgemäßen Laserstrahlschweißkopfes zur Bestimmung der Geometrie der erzeugten Schweißnaht dadurch verwendet werden, in dem zur optischen Erfassung der zweiten Messposition ein zweiter Linien-Projektor zur Projektion einer zweiten Laserlinie an der zweiten Messposition lateral zur Schweißnaht und zweite Bildverarbeitungsmittel, insbesondere eine zweite CMOS-Kamera, zur Beobachtung der zweiten Messposition vorgesehen ist und die Laserlinie des zweiten Linien-Projektors in Bezug auf die Beobachtungsachse der Bildverarbeitungsmittel in einem vorgegebenen Winkel auf die Messposition projiziert wird und optional ein an die zweite Laserlinie angepasstes Filterelement im Strahlengang der zweiten Bildverarbeitungsmittel vorgesehen ist.

Allerdings kann auf ein zweites Filterelement und auf einen zusätzlichen Strahlengang für die zweiten Bildverarbeitungsmittel dann verzichtet werden, wenn ein erster und ein zweiter Linien-Projektor vorgesehen sind, welche eine Laserlinie mit der gleichen Wellenlänge, vorzugsweise einer Wellenlänge von 805 nm, emittieren. In diesem Fall können beide Bildverarbeitungsmittel den gleichen Strahlengang und das gleiche Filterelement nutzen. Werden beispielsweise die erste und die zweite Messposition an zwei verschiedenen Orten in einer Bildebene des Strahlengangs abgebildet, können die Bildverarbeitungsmittel lediglich durch eine benachbarte Anordnung in der Bildebene im Strahlengang die Messsignale der verschiedenen Messpositionen getrennt aufnehmen. Es kann aber auch nur ein Bildverarbeitungsmittel vorgesehen sein, dessen einzelne den Messpositionen zugeordneten Messbereiche getrennt ausgelesen bzw. ausgewertet werden können.

Vorzugsweise ist eine Fasereinkopplung im Laserstrahlschweißkopf zur Einkopplung des Schweißstrahls vorgesehen, so dass am Laserstrahlschweißkopf selbst keine Laserquellen angeordnet sind und dieser einfacher ausgebildet werden kann. Es ist jedoch auch ohne weiteres denkbar, Laserquellen, beispielsweise Diodenlaser, am Laserstrahlschweißkopf zu befestigen und auf eine Fasereinkopplung des Schweißstrahls zu verzichten.

Gemäß einer zweiten Lehre der vorliegenden Erfindung wird die oben gezeigte Aufgabe durch die Verwendung eines erfindungsgemäßen Laserstrahlschweißkopfes mit einem Handling-System, insbesondere einem Knickarm-Mehrachsenroboter, zum Schweißen von Metallteilen, insbesondere zum Schweißen von "Engineered-Blanks", gelöst. Einerseits wird durch die Verwendung des erfindungsgemäßen Laserstrahlschweißkopfes die dynamische Positionsgenauigkeit der Schweißnaht bei zu verschweißenden Metallteilen deutlich erhöht, andererseits wird der Einsatz kostengünstiger Knickarm-Mehrachsenroboter durch die Verwendung ermöglicht. Dies ist insbesondere vorteilhaft beim Schweißen von "Engineered-Blanks". "Engineered-Blanks" sind Metallteile, welche durch Verschweißen mit anderen Metallteilen bzw. Blechen zu belastungsgerecht ausgelegten Halbzeugen hergestellt werden, bei welchen die exakte Positionierung der Schweißnaht im Hinblick auf die Belastungsfähigkeit der "Engineered-Blanks" eine entscheidende Rolle spielt. Obwohl die Schweißradien teilweise weniger als 60 mm betragen und eine Genauigkeit der Positionierung der Schweißnaht von +/- 0,15 mm gefordert wird, ermöglicht die erfindungsgemäßen Verwendung des Laserstrahlschweißkopfes eine zügige und kostengünstige Herstellung der "Engineered-Blanks" mit hoher Qualität.

Gemäß einer dritten Lehre der vorliegenden Erfindung wird die oben gezeigte Aufgabe durch ein gemäß Anspruch 10 Verfahren gelöst

Wie oben bereits aufgezeigt, wird durch den geringen Abstand zwischen der ersten Messposition und der Schweißposition des Schweißstrahls überraschenderweise erreicht, dass der Vorlauf der ersten Messposition zur Position des Schweißstrahls bei der Korrekturberechnung unberücksichtigt gelassen werden kann. Im Ergebnis wird eine besonders einfache und schnelle Berechnung der Abweichung der Schweißnaht von einer Sollposition zur Verfügung gestellt. Durch die nahezu instantane ("nahe Echtzeit") Berücksichtung der Position der Schweißnaht können Eigenschwingungen des Handling-Systems und Ungenauigkeiten bei der Positionierung des Laserstrahlschweißkopfes auch bei hohen Schweißgeschwindigkeiten von mehr als 10 m/min korrigiert werden.

Vorzugsweise beträgt der Abstand der ersten Messposition von der Position des Schweißstrahls maximal 3 mm, vorzugsweise maximal 2 mm. Die Position des Schweißstrahls bestimmt den Ort des Eindringens des "Key-holes", welches beim Schweißen von Metallteilen in der Regel gebildet wird. Trotz des Vorlaufes von maximal 3 mm, vorzugsweise maximal 2 mm, kann überraschenderweise der systematische Fehler, welcher unter Nichtberücksichtigung des Vorlaufes entsteht, dennoch vernachlässigt werden und eine schnelle, unmittelbare, insbesondere vorlaufberechnungsfreie Korrektur der Schweißposition des Schweißstrahls verwendet werden, um eine Schweißnahtgenauigkeit von +/- 0,15 mm zu gewährleisten.

Um eine möglichst schnelle Korrektur der Position des Schweißstrahls relativ zur Schweißnaht zu ermöglichen, wird mindestens ein Stellelement im Strahlengang des Schweißstrahls des Laserstrahlschweißkopfes zumindest unter Verwendung des Korrektursignals gemäß einer nächsten erfindungsgemäßen Ausgestaltung des Verfahrens angesteuert. Die Bewegung träger Massen, welche bei der Veränderung der Position des Schweißstrahls zu zusätzlichen Ungenauigkeiten führen könnte, wird dadurch minimiert.

Gemäß einer besonders einfachen Ausgestaltung des erfindungsgemäßen Verfahrens wird als Stellelement ein kippbarer Spiegel, insbesondere ein dichroitischer Spiegel, angesteuert. Wie zuvor ausgeführt, erfüllt ein dichroitischer Spiegel einerseits für bestimmte Wellenlängen die Funktion eines Spiegels, beispielsweise im Bereich der Wellenlänge des Schweißstrahls. Andererseits kann der dichroitische Spiegel für die Wellenlängen, welche beispielsweise zur Ermittlung der Position der Schweißnaht verwendet werden, im Wesentlichen transparent sein. Durch die Kippbewegung des dichroitischen Spiegels kann der Schweißstrahl in eine beliebige Position, vorzugsweise lateral zur Schweißnaht, geschwenkt werden, ohne den Strahlengang der optischen Erfassung zu verändern. Gleichzeitig kann der dichroitische Filter zur Trennung des Prozessleuchtens im Strahlengang des Schweißstrahls und dann im Strahlengang der ersten Beobachtungsmittel dienen. Denkbar ist jedoch auch, dass über ein oder mehrere weitere Stellelemente oder Spiegel der Fokuspunkt des Laserstrahls vertikal zur Schweißnaht unmittelbar abhängig vom Korrektursignal verschoben wird.

Eine besonders hohe Prozesssicherheit wird gemäß einer nächsten vorteilhaften Ausführungsform des erfindungsgemäßen Verfahrens dadurch erreicht, dass ein erster Linien-Projektor eine Laserlinie an der ersten Messprojektion projiziert und erste Bildverarbeitungsmittel, insbesondere eine erste CMOS-Kamera, die erste Messposition optisch auswertet, wobei ein im Strahlengang der Bildverarbeitungsmittel angeordnetes und an die Laserlinie angepasstes Filterelement das optische Signal von der ersten Messposition filtert. Durch die Kombination der Laserlinie in Verbindung mit dem zusätzlichen Filterelement kann das optische Signal von der Messposition sehr gut auf ein extrem schmalen Wellenlängenbereich, nämlich dem der Laserlinie, angepasst werden. Hierdurch wird erreicht, dass das Messsignal der ersten Bildverarbeitungsmittel ein besonders gutes Signal/Rauschverhältnis aufweist.

Vorzugsweise wird die erste Laserlinie in einem Winkel zur Beobachtungsachse der ersten Bildverarbeitungsmittel auf die erste Messposition projiziert und die Auswertung der ersten Messposition durch die Bildverarbeitungsmittel erfolgt nach dem Lichtschnittprinzip. Die Laserlinie wird also nicht coaxial auf die erste Messposition projiziert. Wie bereits beschrieben, wird über das Lichtschnittprinzip mit Hilfe von Triangulationsverfahren neben der lateralen Abweichung gleichzeitig, entsprechend einer Profilmessung, die Abweichung der Solllage der Schweißnahtposition in vertikaler Richtung bestimmbar, so dass die Schweißposition des Schweißstrahls auch an Abweichungen in vertikaler Richtung zur Schweißnaht angepasst werden kann. Darüber hinaus kann aus dem Profil in besonders einfacher Art und Weise durch Bildverarbeitungsverfahren die exakte Schweißnahtposition bestimmt werden und dadurch die Abweichung von der Sollposition einfach berechnet werden. Durch den insgesamt geringen Berechnungsaufwand erhöht sich die Korrekturgeschwindigkeit weiter.

Emittiert der Linien-Projektor eine Laserlinie mit einer Wellenlänge im nahen Infrarotbereich, insbesondere mit einer Wellenlänge von 805 nm, kann die Prozesssicherheit bei der Bestimmung der Schweißnahtposition weiter gesteigert werden, da in diesem Wellenlängenbereich mit Hilfe eines Kantenfilters weder der Schweißstrahl selbst, noch die von der Schweißnaht emittierte Wärmestrahlung oder das Metalldampfleuchten starke Störsignale in den Bildverarbeitungsmitteln erzeugen. Dies ist insbesondere bei geringen Abständen zwischen der Schweißposition des Schweißstrahls und der ersten Messposition vorteilhaft.

Die Überprüfung der Qualität der zweiten Schweißnaht kann schließlich dadurch erfolgen, dass an einer zweiten Messposition in Schweißrichtung nachlaufend zur Schweißposition des Schweißstrahls eine optische Erfassung der erzeugten Schweißnaht erfolgt.

Vorzugsweise projiziert zur optischen Erfassung der erzeugten Schweißnaht ein zweiter Linien-Projektor eine Laserlinie lateral zur Schweißnaht an der zweiten Messposition, wobei die Laserlinie in einem Winkel zu der Beobachtungsachse von zweiten Bildverarbeitungsmitteln, insbesondere einer zweiten CMOS-Kamera an der zweiten Messposition projiziert und das Lichtschnittprinzip zur Auswertung der Messung an der zweiten Messposition verwendet wird. Das erfindungsgemäße Verfahren integriert nicht nur eine besonders schnelle und genaue Korrektur der Schweißposition mit einer Qualitätsüberwachung der Schweißnaht, sondern ermöglicht auch einen kompakten Aufbau des Laserstrahlschweißkopfes, insbesondere wenn die Messung an der zweiten Messposition mit einer Laserlinie gleicher Wellenlänge wie an der ersten Messposition erfolgt.

Es gibt nun eine Vielzahl von Möglichkeiten den erfindungsgemäßen Laserstrahlschweißkopf sowie das erfindungsgemäße Verfahren zum Verschweißen von Metallteilen auszugestalten und weiterzubilden. Hierzu wird verwiesen auf die den Patentansprüchen 1 und 14 nachgeordneten Patentansprüchen. Andererseits wird verwiesen auf die Beschreibung eines Ausführungsbeispiels eines erfindungsgemäßen Laserstrahlschweißkopfes in Verbindung mit der Zeichnung. Die Zeichnung zeigt in
- Fig. 1: in einer schematischen Schnittansicht die Strahlengänge eines Ausführungsbeispiels des erfindungsgemäßen Laserstrahlschweißkopfes und
- Fig. 2: in einem Diagramm die mit dem Ausführungsbeispiel aus Fig. 1 gemessenen systematischen Restabweichungen in Abhängigkeit vom Abstand der ersten Messposition zur Schweißposition.

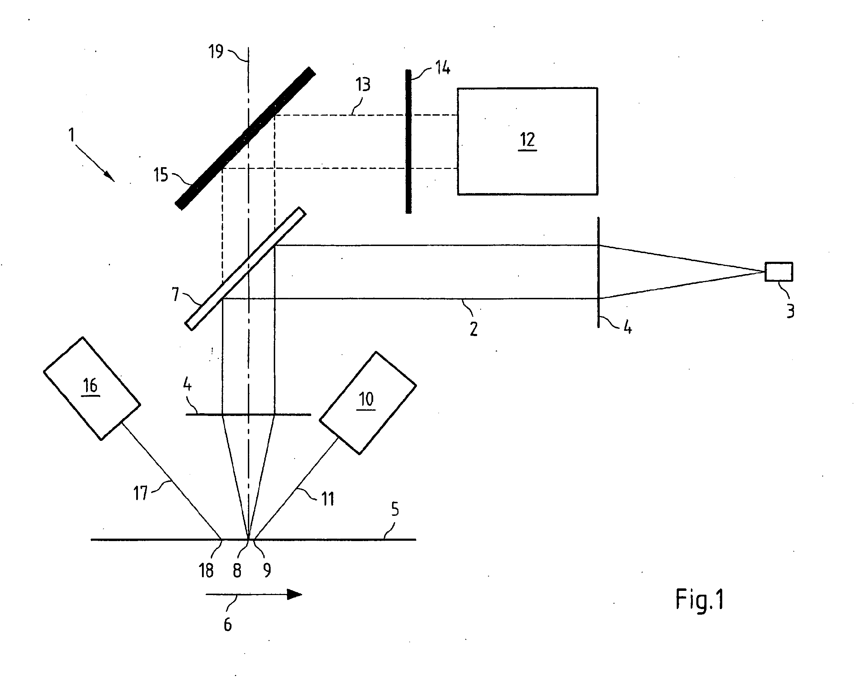

In der Fig. 1 ist zunächst der Strahlengang 2 des Schweißstrahls eines Ausführungsbeispiels des erfindungsgemäßen Laserstrahlschweißkopfes 1 schematisch dargestellt. Der Schweißstrahl 2 wird vorzugsweise über eine Fasereinkopplung 3 in den Laserstrahlschweißkopf eingekoppelt. Durch die optischen Elemente 4 wird der Schweißstrahl 2 auf die zu schweißenden Metallteile 5 fokussiert. Die Fokussierung verursacht dann zumeist die Ausbildung eines nicht dargestellten "Key-holes" durch das sich bildende Laserplasma, welches dann die Schweißnaht erzeugt und damit die Schweißposition des Schweißstrahls 2 angibt. Die zu verschweißenden Metallteile 5 bewegen sich relativ zu dem Laserstrahlschweißkopf 1 in der durch den Pfeil 6 angezeigten Richtung. In dem dargestellten Ausführungsbeispiel eines erfindungsgemäßen Laserstrahlschweißkopfes 1 ist im Strahlengang des Schweißstrahls 2 ein dichroitischer Spiegel 7 vorgesehen, welcher als Stellelement Kippbewegungen durchführen kann. Die Kippachse des dichroitischen Spiegels 7 kann beispielsweise parallel zur Zeichnungsebene liegen, so dass durch Ansteuerung des dichroitischen Spiegels 7 die Schweißposition 8 des Schweißstrahls senkrecht zur Zeichnungsebene, d.h. lateral zur Schweißrichtung 6 verändert werden kann. Vorlaufend in Schweißrichtung 6 ist eine erste Messposition 9 vorgesehen, an der ein Linien-Projektor 10 eine Laserlinie 11 im Winkel zur Beobachtungsachse von Bildverarbeitungsmitteln 12 lateral zur Schweißnaht projiziert. Mit den Beobachtungsmitteln 12, welche beispielsweise durch eine CMOS-Kamera realisiert werden können, kann nun nach dem Lichtschnittprinzip das Profil der Schweißnaht vor dem Verschweißen beobachtet werden, da der dichroitische Spiegel 7 durchlässig für die Wellenlänge der vom Linie-Projektor emittierten Laserlinie ist. Entsprechend dem eingezeichneten Strahlengang 13 wird das Bild der projizierten Laserlinie 11 auf der Schweißnaht von dem Bildverarbeitungsmittel 12 gemessen. Dadurch, dass nicht nur der dichroitische Spiegel 7, sondern auch ein zusätzliches Filterelement 14 im Strahlengang der Bildverarbeitungsmittel 12 vorgesehen ist, werden alle Störungen verursacht durch den Schweißstrahl 2 selbst, durch Metallspritzer, die Wärmestrahlung der Schweißnaht oder das Metalldampfleuchten über dem "Key-hole" unterdrückt und lediglich die Laserlinie und damit das gemessene Profil der Schweißnaht optisch ausgewertet. Durch die Linien beleuchtete Schweißspritzer (160 Stück/s) führen zu ca. 2 % Messpunktfehler, die als Ausreißer von einem Algorithmus, beispielsweise per ja/nein Abfrage, "herausgerechnet" werden können.

Durch Verwendung von Triangulationsverfahren kann nach dem Lichtschnittprinzip die Position der Schweißnaht an der ersten Messposition 9 exakt und mit hoher Geschwindigkeit bestimmt werden. Aus der gemessenen Abweichung der aktuellen Position der Schweißnaht zu einer Sollposition wird erfindungsgemäß ein Korrektursignal unmittelbar, insbesondere ohne Berücksichtigung des Vorlaufes der Messposition 9 zur Schweißposition 8 zur Korrektur beispielsweise an den kippbaren Spiegel 7 gesendet. Dieser nimmt dann die Korrektur der Schweißposition 8 des Schweißstrahls 2 durch eine entsprechende Änderung seiner Stellung vor. Die Dynamik des kippbaren Spiegels 7 ist dabei so ausgelegt, dass die Position des Schweißstrahls 2 innerhalb der verbleibenden Vorlaufszeit korrigiert werden kann.

Der zusätzliche Spiegel 15 kann vorgesehen sein, um zusätzlich einen kompakteren Aufbau des erfindungsgemäßen Laserstrahlschweißkopfes 1 zu ermöglichen. Aufgrund der vielseitigen Einsatzmöglichkeiten, beispielsweise in Bezug auf das Verschweißen von Kehlnähten, kann die Größe des Laserstrahlschweißkopfes 1 ebenfalls praktische Bedeutung erlangen.

Zur Kontrolle der erzeugten Schweißnaht ist nun ein weiterer Linien-Projektor 16 im dargestellten Ausführungsbeispiel vorgesehen, welcher wiederum in einem Winkel zur Beobachtungsachse der Bildverarbeitungsmittel 12 eine Laserlinie 17 auf die Schweißnaht lateral zur Schweißrichtung 6 an einer zweiten Messposition 18 projiziert. Da die erste und die zweite Messposition ohne weiteres im Strahlengang voneinander getrennt werden können, ist vorzugsweise in dem Bildverarbeitungsmittel 12 für jede Messposition eine CMOS-Kamera oder ein anderer flächiger optischer Sensor zur optischen Auswertung vorgesehen, welche der Einfachheit halber in Fig. 1 nicht dargestellt sind.

Durch die Verwendung zweier verschiedener CMOS-Kameras für jede Messposition 9, 18 können kleinere CMOS-Kameras mit einer geringeren Pixelzahl verwendet werden, die unabhängig von einander auslesbar sind. Bei gleicher Messgenauigkeit kann dann die Dynamik der Korrektur der Schweißposition aufgrund der geringeren Mess- bzw. Auslesezeit der CMOS-Kameras zur Bestimmung der Abweichung der Schweißnaht von der Sollposition gesteigert werden. Es ist aber auch vorstellbar, eine einzelne CMOS-Kamera in zwei verschiedene Segmente aufzuteilen, welche getrennt ausgewertet werden.

Dadurch, dass eine Verrechnung des Vorlaufes der ersten Messposition 9 zur Korrektur der Schweißposition 8 erfindungsgemäß nicht erfolgt, kann eine besonders hohe Dynamik der Nahtverfolgung erzielt werden, wobei gleichzeitig hohe Schweißgeschwindigkeiten von mehr als 10 m/min erreichbar sind. Aufgrund der schnellen Korrektur ist der erfindungsgemäße Laserstrahlschweißkopf 1 in der Lage, Eigenschwingungen eines Mehrachsenroboters und Positionierungenauigkeiten auszugleichen.

Aufgrund des geringen Rechenaufwandes bei dem erfindungsgemäßen Laserstrahlschweißkopf 1 ist auch denkbar, diesen mit zusätzlichen, stärker vorlaufend messenden Mitteln zur Erfassung der Position der Schweißnaht, welche in der Fig. 1 nicht dargestellt sind, auszustatten, um eine zweistufige Positionsbestimmung des Schweißposition 8 zu ermöglichen.

Vorteilhaft ist die hohe Genauigkeit der Schweißnahtverfolgung des erfindungsgemäßen Laserstrahlschweißkopfes 1 insbesondere dann, wenn Schweißnahtradien von weniger als 60 mm auftreten. Aufgrund des robusten Messverfahrens zur Nahtverfolgung und der schnellen Korrektur können derartig kleine Radien mit dem erfindungsgemäßen Laserstrahlschweißkopf 1 ohne weiteres unter Verwendung eines Mehrachsenroboters geschweißt werden.

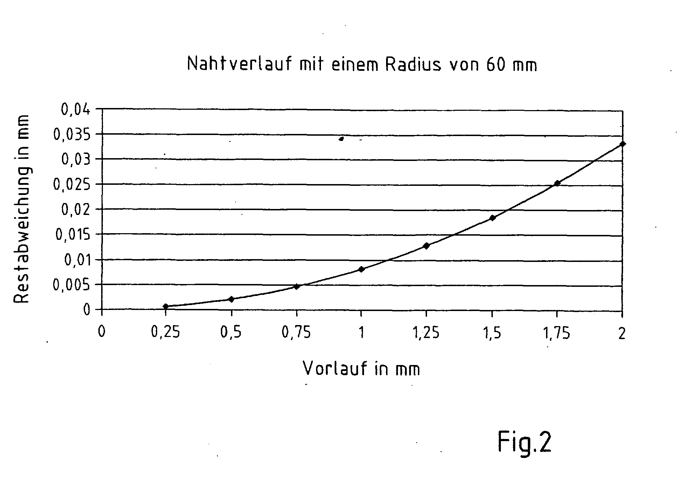

Eine Bestimmung des Restabweichungsfehlers, welcher systematisch durch die Vernachlässigung des Vorlaufes in Abhängigkeit von dem Abstand der ersten Messposition von der eigentlichen Schweißposition erzeugt wird, ist in dem Diagramm der Fig. 2 dargestellt.

Für die Messung der Restabweichung aus Fig. 2 wurde beispielsweise ein Linien-Projektor 10, der eine Laserlinie 11 mit einer Wellenlänge von 805 nm emittiert bei einer Linienabmessung von 6 x 0,05 mm verwendet. Die Auflösung des optischen Bildverarbeitungsmittels 12, eine CMOS-Kamera, betrug in z- wie in x-Richtung 20 µm. Zusätzlich wurde ein steilflankiges Filterelement 14 mit einem Transmissionsfenster bei einer Wellenlänge von 805 +/- 5 nm im Strahlengang des Bildverarbeitungsmittels verwendet.

Die Restabweichung beträgt bei einem Vorlauf von 2 mm, d.h. bei einem Abstand der Messposition 9 von der Schweißposition 8 von 2 mm, lediglich 0,035 mm und damit deutlich unterhalb der geforderten Genauigkeitsgrenze. Im Bereich von 0,25 mm Vorlauf nähert sich die Restabweichung der Auflösungsgrenze, so dass diese nicht mehr registriert werden kann. Die in Fig. 2 dargestellten Ergebnisse hinsichtlich der Restabweichung, d.h. des systematischen Fehlers bei Vernachlässigung des Verlaufes, sind bei einem Nahtverlauf mit einem Radius von 60 mm mit mehr als 10m/min Schweißgeschwindigkeit gemessen worden. Hieraus wird deutlich, dass die Genauigkeiten bei einem annähernd geraden Verlauf der Schweißnaht durch das erfindungsgemäße Verfahren oder unter Verwendung des erfindungsgemäßen Schweißkopfes noch deutlich höher sein kann.

## Patentansprüche

1. Laserstrahlschweißkopf (1) zum Schweißen von Metallteilen mit mindestens einem Strahlengang für einen Schweißstrahl (2) und Mitteln zur optischen Erfassung der Position der Schweißnaht an einer ersten Messposition (9), wobei die Mittel zur optischen Erfassung der Position der Schweißnaht eine Anordnung der ersten Messposition (9) zumindest in Schweißrichtung (6) vorlaufend vor der Schweißposition (8) des Schweißstrahls (2) ermöglichen und zumindest in Abhängigkeit von einer lateralen Abweichung der Schweißnaht von einer Sollposition ein Korrektursignal zur Korrektur der Schweißposition (8) des Schweißstrahls (2) erzeugen, wobei mindestens ein Stellelement (7) im Strahlengang des Schweißstrahls (2) zur Veränderung der Schweißstrahlposition vorgesehen ist, welches durch das Korrektursignal ansteuerbar ist und wobei als Stellelement mindestens ein kippbarer Spiegel (7), vorzugsweise ein dichroitischer Spiegel, vorgesehen ist,
**dadurch gekennzeichnet, dass** der Abstand der ersten Messposition (9) vorlaufend zur Schweißposition (9) des Schweißstrahls (2) so gewählt ist, dass das erzeugte Korrektursignal ohne Vorlaufberechnung und ohne Berücksichtigung des Vorlaufs der Messposition zur Schweißposition unmittelbar zur Ansteuerung von Mitteln (7) zur Korrektur der Schweißposition (8) des Schweißstrahls (2) verwendet wird und als Mittel zur optischen Lageerfassung erste Bildverarbeitungsmittel (12) und ein erster Linien-Projektor (10) zur Projektion einer in lateraler Richtung zur Schweißnaht verlaufenden Laserlinie (11) an der ersten Messposition (9) vorgesehen sind, wobei im Strahlengang (13) der ersten Bildverarbeitungsmittel ein an die Wellenlänge der Laserlinie angepasstes Filterelement (14) vorgesehen ist und der Linienprojektor eine Laserlinie mit einer Wellenlänge im nahen Infrarotbereich emittiert.

2. Laserstrahlschweißkopf nach Anspruch 1,
**dadurch gekennzeichnet, dass** der Abstand der ersten Messposition (9) zur Schweißposition (8) des Schweißstrahls (2) maximal 3 mm, vorzugsweise maximal 2 mm beträgt.

3. Laserstrahlschweißkopf nach Anspruch 1 oder 2,
**dadurch gekennzeichnet, dass** als erstes Bildverarbeitungsmittel (12) eine CMOS-Kamera vorgesehen ist.

4. Laserstrahlschweißkopf nach einem der Ansprüche 1 bis 3,
**dadurch gekennzeichnet, dass** als Lichtquelle für den ersten Linien-Projektor (10) eine Laserquelle mit einer Wellenlänge von 805 nm vorgesehen ist und das optische Filterelement (14) im Strahlengang (13) der ersten Bildverarbeitungsmittel (12) eine maximale Transmission bei einer Wellenlänge von 805 nm aufweist.

5. Laserstrahlschweißkopf nach einem der Ansprüche 1 bis 4, **dadurch gekennzeichnet, dass** die Laserlinie (11) in Bezug auf die Beobachtungsachse (19) der ersten Bildverarbeitungsmittel (12) in einem vorgegebenen Winkel auf die erste Messposition (9) projizierbar ist.

6. Laserstrahlschweißkopf nach einem der Ansprüche 1 bis 5, **dadurch gekennzeichnet, dass** weitere Mittel zur optischen Erfassung einer zweiten Messposition (18) in Schweißrichtung nachlaufend hinter der Schweißposition des Schweißstrahls (2) vorgesehen sind.

7. Laserstrahlschweißkopf nach einem der Ansprüche 1 bis 6, **dadurch gekennzeichnet, dass** zur optischen Erfassung der zweiten Messposition (18) ein zweiter Linien-Projektor (16) zur Projektion einer zweiten Laserlinie (17) an der zweiten Messposition und zweite Bildverarbeitungsmittel, insbesondere eine zweite CMOS-Kamera, zur Beobachtung der zweiten Messposition (18) vorgesehen ist, die Laserlinie (17) des zweiten Linien-Projektors (16) in Bezug auf die Beobachtungsachse der zweiten Bildverarbeitungsmittel in einem vorgegebenen Winkel auf die Messposition projiziert wird und optional ein an die zweite Laserlinie angepasstes Filterelement im Strahlengang (12) der zweiten Bildverarbeitungsmittel vorgesehen ist.

8. Laserstrahlschweißkopf nach einem der Ansprüche 1 bis 7, **dadurch gekennzeichnet, dass** ein erster und ein zweiter Linien-Projektor (10, 15) vorgesehen sind, welche eine Laserlinie mit der gleichen Wellenlänge, vorzugsweise mit einer Wellenlänge von 805 nm, emittieren.

9. Verwendung eines Laserstrahlschweißkopfes nach einem der Ansprüche 1 bis 8 mit einem Handling-System, insbesondere einem Knickarm-Mehrachsenroboter, zum Schweißen von Metallteilen, insbesondere zum Schweißen von "Engineered-Blanks".

10. Verfahren zum Strahlschweißen von Metallteilen, insbesondere unter Verwendung eines Laserstrahlschweißkopfs nach einem der Ansprüche 1 bis 8, bei welchem die Position der Schweißnaht unter Verwendung optischer Erfassungsmittel an einer ersten Messposition vorlaufend vor der Schweißposition des Schweißstrahls ermittelt wird und abhängig von der Abweichung der Position der Schweißnaht zu einer Sollposition ein Korrektursignal erzeugt wird, wobei mindestens ein Stellelement im Strahlengang des Schweißstrahls des Laserstrahlschweißkopfes zumindest unter Verwendung des Korrektursignals angesteuert wird und wobei als Stellelement ein kippbarer Spiegel, insbesondere ein dichroitischer Spiegel, angesteuert wird,
**dadurch gekennzeichnet, dass** der Abstand der ersten Messposition von der Position des Schweißstrahls so gewählt ist, dass das Korrektursignal ohne Vorlaufberechnung und ohne Berücksichtigung des Vorlaufs der Messposition zur Schweißposition unmittelbar zur Ansteuerung von Mitteln zur Korrektur der Schweißposition des Schweißstrahls verwendet wird, ein erster Linien-Projektor eine Laserlinie in lateraler
Richtung zur Schweißnaht an der ersten Messposition projiziert und erste Bildverarbeitungsmittel die erste Messposition optisch auswerten, wobei ein im Strahlengang der Bildverarbeitungsmittel angeordnetes und an die Wellenlänge der Laserlinie angepasstes Filterelement das optische Messsignal von der ersten Messposition filtert und der Linienprojektor eine Laserlinie mit einer Wellenlänge im nahen Infrarotbereich emittiert.

11. Verfahren nach Anspruch 10,
**dadurch gekennzeichnet, dass** der Abstand der ersten Messposition von der Position des Schweißstrahls maximal 3 mm, vorzugsweise maximal 2 mm, beträgt.

12. Verfahren nach Anspruch 10 oder 11,
**dadurch gekennzeichnet, dass** als erste Bildverarbeitungsmittel eine erste CMOS-Kamera die erste Messposition optisch auswertet.

13. Verfahren nach einem der Ansprüche 10 bis 12,
**dadurch gekennzeichnet, dass** die erste Laserlinie in einem Winkel zur Beobachtungsachse der ersten Bildverarbeitungsmittel auf die erste Messposition projiziert wird und die Auswertung der ersten Messposition durch die Bildverarbeitungsmittel nach dem Lichtschnittprinzip erfolgt.

14. Verfahren nach einem der Ansprüche 10 bis 13,
**dadurch gekennzeichnet, dass** an einer zweiten Messposition in Schweißrichtung nachlaufend zur Schweißposition des Schweißstrahls eine optische Erfassung der erzeugten Schweißnaht erfolgt.

15. Verfahren nach einem der Ansprüche 10 bis 14,
**dadurch gekennzeichnet, dass** zur optische Erfassung der erzeugten Schweißnaht ein zweiter Linien-Projektor eine Laserlinie an der zweiten Messposition projiziert, wobei die Laserlinie in einem Winkel zu der Beobachtungsachse von zweiten Bildverarbeitungsmitteln, insbesondere einer zweiten CMOS-Kamera, an der zweiten Messposition projiziert und das Lichtschnittprinzip zur Auswertung der Messung an der zweiten Messposition verwendet wird.

## Claims

1. Laser beam welding head (1) for the welding of metal parts with at least one beam path for a welding beam (2) and means for the optical acquisition of the position of the welding seam at a first measuring position (9), wherein the means for the optical acquisition of the position of the welding seam allow arrangement of the first measuring position (9) at least in the welding direction (6) running ahead of the welding position (8) of the welding beam (2) and, at least as a function of a lateral deviation of the welding seam from a reference position, generate a correction signal for the correction of the welding position (8) of the welding beam (2), wherein at least one actuator element (7) is provided in the beam path of the welding beam (2) in order to change the welding beam position, which can be actuated by the correction signal and wherein, as the actuator element, at least one tiltable mirror (7) is provided, preferably a dichroic mirror,
**characterised in that**
the distance interval from the first measuring position (9) running ahead to the welding position (9) of the welding beam (2) is selected in such a way that the correction signal generated is used without an advance run calculation and without considering the advance run of the measuring position to the welding position directly to actuate means (7) for correcting the welding position (8) of the welding beam (2) and as means for optical acquisition of the position, first image processing means (12) are provided and a first line projector (10) for projection of a laser line (11) running in lateral direction to the welding seam is provided at the first measuring position (9), wherein in the beam path (13) of the first image processing means a filter element (14) is provided, adjusted to the wavelength of the laser line and the line projector emits a laser line with a wavelength in the near-infrared range.

2. Laser beam welding head according to Claim 1, **characterised in that** the distance interval from the first measuring position (9) to the welding position (8) of the welding beam (2) amounts to a maximum of 3 mm, preferably a maximum of 2 mm.

3. Laser beam welding head according to Claim 1 or 2, **characterised in that**, as first image processing means (12) a CMOS camera is provided.

4. Laser beam welding head according to any one of Claims 1 to 3, **characterised in that**, as a light source for the first line projector (10), a laser source is provided with a wavelength of 805 nm, and the optical filter element (14) in the beam path (13) of the first image processing means (12) has a maximum transmission at a wavelength of 805 nm.

5. Laser beam welding head according to any one of Claims 1 to 4, **characterised in that** the laser line (11) can be projected in relation to the observation axis (19) of the first image processing means (12) at a predetermined angle onto the first measuring position (9).

6. Laser beam welding head according to any one of Claims 1 to 5, **characterised in that** further means are provided for optical acquisition of a second measuring position (18) in the welding direction running behind the welding position of the welding beam (2).

7. Laser beam welding head according to any one of Claims 1 to 6, **characterised in that**, for optical acquisition of the second measuring position (18), a second line projector (16) is provided for projection of a second laser line (17) at the second measuring position and second image processing means, in particular a second CMOS camera, for observation of the second measuring position (18), the laser line (17) of the second line projector (16) is projected in relation to the observation axis of the second imaging processing means at a predetermined angle onto the measuring position, and, optionally, a filter element, adjusted to the second laser line, is provided in the beam path (12) of the second image processing means.

8. Laser beam welding head according to any one of Claims 1 to 7, **characterised in that** a first and a second line projector (10, 15) are provided, which emit a laser line with the same wavelength, preferably with a wavelength of 805 nm.

9. Use of a laser beam welding head according to any one of Claims 1 to 8, with a handling system, in particular a folding-arm multi-axis robot, for welding metal parts, in particular for welding "engineered blanks".

10. Method for the beam welding of metal parts, in particular with the use of a laser beam welding head, according to any one of Claims 1 to 8, in which the position of the welding seam is determined by the use of optical acquisition means at a first measuring position running ahead of the welding position of the welding beam, and, depending on the deviation of the position of the welding seam from a reference position, a correction signal is generated, wherein at least one actuator element in the beam path of the welding beam of the laser beam welding head is actuated at least with the use of the correction signal and wherein, as the actuator element, a tiltable mirror, in particular a dichroic mirror, is actuated,
**characterised in that**
the distance interval between the first measuring position and the position of the welding beam is selected in such a way that the correction signal is used without an advance run calculation and without considering the advance run of the measuring position to the welding position directly to actuate means for correcting the welding position of the welding beam, a first line projector projects a laser line in lateral direction to the welding seam at the first measuring position, and first image processing means optically evaluate the first measuring position, wherein a filter element arranged in the beam path of the image processing means and adjusted to the wavelength of the laser line filters the optical measuring signal of the first measuring position and the line projector emits a laser line with a wavelength in the near-infrared range.

11. Method according to Claim 10, **characterised in that** the distance interval between the first measuring position and the position of the welding beam is a maximum of 3 mm, preferably a maximum of 2 mm.

12. Method according to Claim 10 or 11, **characterised in that** as first image processing means a first CMOS camera optically evaluates the first measuring position

13. Method according to any one of Claims 10 to 12, **characterised in that** the first laser line is projected at an angle to the observation axis of the first image processing means onto the first measuring position and evaluation of the first measuring position takes place by the image processing means in accordance with the light section principle.

14. Method according to any one of Claims 10 to 13, **characterised in that**, at a second measuring position in the welding direction, running after the welding position of the welding beam, optical acquisition of the welding seam which has been created is carried out.

15. Method according to any one of Claims 10 to 14, **characterised in that**, for optical acquisition of the welding seam which has been created, a second line projector projects a laser line at the second measuring position, wherein the laser line is projected at an angle to the observation axis of second image processing means, in particular of a second CMOS camera, at the second measuring position, and the light section principle is used for evaluation of the measurement at the second measuring position.

## Revendications

1. Tête de soudage à faisceau laser (1) pour le soudage de pièces métalliques avec au moins une trajectoire de faisceau pour un faisceau de soudage (2) et des moyens pour le captage optique de la position du cordon de soudure sur une première position de mesure (9), dans laquelle les moyens de captage optique de la position du cordon de soudure permettent une disposition de la première position de mesure (9) en avant de la position de soudage (8) du faisceau de soudage (2), au moins dans le sens de soudage (6), et génèrent, au moins en fonction d'un écart latéral du cordon de soudure par rapport à une position de consigne, un signal de correction permettant de corriger la position de soudage (8) du faisceau de soudage (2), dans laquelle au moins un élément de réglage (7) est prévu sur la trajectoire du faisceau de soudage (2) pour modifier la position du faisceau de soudage, lequel élément peut être piloté par le signal de correction, et dans laquelle au moins un miroir basculant (7), de préférence un miroir dichroïque, est prévu comme élément de réglage,
**caractérisée en ce que**
la distance de la première position de mesure (9) située en avant par rapport à la position de soudage (9) du faisceau de soudage (2) est choisie de sorte que le signal de correction généré soit utilisé, sans calcul de l'avance et sans tenir compte de l'avance de la position de mesure par rapport à la position de soudage, directement afin de piloter des moyens (7) pour la correction de la position de soudage (8) du faisceau de soudage (2) et **en ce que** de premiers moyens de traitement d'image (12) sont prévus comme moyens pour le captage optique de position et un premier projecteur de lignes (10) est prévu pour projeter une ligne laser (11) avec un tracé dans le sens latéral par rapport au cordon de soudure sur la première position de mesure (9), dans laquelle, sur la trajectoire du faisceau (13) des premiers moyens de traitement d'image, un élément de filtrage (14) adapté à la longueur d'onde de la ligne laser est prévu et le projeteur de lignes émet une ligne laser d'une longueur d'onde dans le proche infrarouge.

2. Tête de soudage à faisceau laser selon la revendication 1,
**caractérisée en ce que**
la distance de la première position de mesure (9) par rapport à la position de soudage (8) du faisceau de soudage (2) est de 3 mm au maximum, de préférence de 2 mm au maximum.

3. Tête de soudage à faisceau laser selon la revendication 1 ou 2,
**caractérisée en ce que**
une caméra CMOS est prévue comme premier moyen de traitement d'image (12).

4. Tête de soudage à faisceau laser selon l'une quelconque des revendications 1 à 3,
**caractérisée en ce que**
pour le premier projecteur de lignes (10), une source laser d'une longueur d'onde de 805 nm est prévue comme source de lumière et **en ce que** l'élément de filtrage optique (14) présente, sur la trajectoire de faisceau (13) des premiers moyens de traitement d'image (12), une transmission maximale avec une longueur d'onde de 805 nm.

5. Tête de soudage à faisceau laser selon l'une quelconque des revendications 1 à 4,
**caractérisée en ce que**
la ligne laser (11) peut être projetée, par rapport à l'axe d'observation (19) des premiers moyens de traitement d'image (12), avec un angle prédéterminé sur la première position de mesure (9).

6. Tête de soudage à rayon laser selon l'une quelconque des revendications 1 à 5,
**caractérisée en ce que**
d'autres moyens sont prévus pour le captage optique d'une deuxième position de mesure (18) située, dans le sens du soudage, derrière la position de soudage du faisceau de soudage (2).

7. Tête de soudage à faisceau laser selon l'une quelconque des revendications 1 à 6,
**caractérisée en ce que**
pour le captage optique de la deuxième position de mesure (18), un deuxième projecteur de lignes (16) est prévu pour projeter une deuxième ligne laser (17) sur la deuxième position de mesure et de seconds moyens de traitement d'image sont prévus, en particulier une deuxième caméra CMOS, pour observer la deuxième position de mesure (18), **en ce que** la ligne laser (17) du deuxième projecteur de lignes (16) est projetée, par rapport à l'axe d'observation des seconds moyens de traitement d'image, avec un angle prédéterminé sur la position de mesure et **en ce qu'**en option, un élément de filtrage adapté à la deuxième ligne laser sur la trajectoire de faisceau (12) des seconds moyens de traitement d'image est prévu.

8. Tête de soudage à rayon laser selon l'une quelconque des revendications 1 à 7,
**caractérisée en ce que**
un premier et un second projecteur de lignes (10, 15) sont prévus, qui émettent une ligne laser de même longueur d'onde, de préférence d'une longueur d'onde de 805 nm.

9. Utilisation d'une tête de soudage à faisceau laser selon l'une quelconque des revendications 1 à 8, comprenant un système de manipulation, en particulier un robot articulé multiaxial de bras, pour souder des pièces métalliques, en particulier pour souder des flans soudés (engineered blanks).

10. Procédé de soudage par faisceau de pièces métalliques, en particulier en utilisant une tête de soudage à faisceau laser selon l'une quelconque des revendications 1 à 8, dans lequel la position du cordon de soudure est déterminée en utilisant des moyens de captage optique sur une première position de mesure située en avant de la position de soudage du faisceau de soudage et un signal de correction est généré en fonction de l'écart de la position du cordon de soudure par rapport à une position de consigne, dans lequel au moins un élément de réglage est piloté, sur la trajectoire du faisceau de soudage de la tête de soudage à faisceau laser, par l'utilisation du signal de correction au moins et dans lequel un miroir basculant, de préférence un miroir dichroïque, est piloté comme élément de réglage,
**caractérisé en ce que**
la distance de la première position de mesure par rapport à la position de soudage du faisceau de soudage est choisie de sorte que le que le signal de correction soit utilisé, sans calcul de l'avance et sans tenir compte de l'avance de la position de mesure par rapport à la position de soudage, directement afin de piloter des moyens pour la correction de la position de soudage du faisceau de soudage, **en ce qu'**un premier projecteur de lignes projette une ligne laser dans le sens latéral par rapport au cordon de soudure sur la première position de mesure et **en ce que** de premiers moyens de traitement d'image exploitent optiquement la première position de mesure, dans lequel un élément de filtrage disposé sur la trajectoire du faisceau des moyens de traitement d'image et adapté à la longueur d'onde de la ligne laser filtre le signal de mesure optique de la première position de mesure et le projecteur de lignes émet une ligne laser d'une longueur d'onde dans le proche infrarouge.

11. Procédé selon la revendication 10,
**caractérisé en ce que**
la distance de la première position de mesure par rapport à la position du rayon du faisceau de soudage est de 3 mm au maximum, de préférence de 2 mm au maximum.

12. Procédé selon la revendication 10 ou 11,
**caractérisé en ce que**
comme premiers moyens de traitement d'image, une première caméra CMOS est prévue, qui exploite la première position de mesure.

13. Procédé selon l'une quelconque des revendications 10 à 12,
**caractérisé en ce que**
la première ligne laser est projetée sur la première position de mesure avec un certain angle par rapport à l'axe d'observation des premiers moyens de traitement d'image et **en ce que** l'exploitation de la première position de mesure par des moyens de traitement d'image s'effectue avec le système de coupe optique.

14. Procédé selon l'une quelconque des revendications 10 à 13,
**caractérisé en ce que**
un captage optique du cordon de soudure réalisé est effectué sur une deuxième position de mesure située, dans le sens du soudage, derrière la position de soudage du faisceau de soudage.

15. Procédé selon l'une quelconque des revendications 10 à 14,
**caractérisé en ce que**
un deuxième projecteur de lignes projette, sur la deuxième position de mesure, une ligne laser pour le captage optique du cordon de soudure réalisé, dans lequel la ligne laser est projetée, sur la deuxième position de mesure, avec un certain angle par rapport à l'axe d'observation de deuxièmes moyens de traitement d'image, en particulier d'une deuxième caméra CMOS, et le système de coupe optique est utilisé pour exploiter les mesures effectuées sur la deuxième position de mesure.
